# EUROPÄISCHE PATENTSCHRIFT

(11) **EP 1 422 019 B1**
(45) Veröffentlichungstag und Bekanntmachung des Hinweises auf die Patenterteilung: **27.01.2010**
(21) Anmeldenummer: 03104301.1
(22) Anmeldetag: 21.11.2003
(51) Int. Cl.: B23P 19/00, B23P 19/04

(54) **Verfahren und Vorrichtung zum Positionieren eines länglichen Gegenstandes**
Method and device for positioning long articles
Procédé et dispositif pour positionner un objet long

(30) Priorität: 22.11.2002 DE 10254521
(43) Veröffentlichungstag der Anmeldung: 26.05.2004
(73) Patentinhaber: Valeo Sicherheitssysteme GmbH, 85253 Erdweg (DE)
(72) Erfinder: Hoffmann, Hans-Gerhard, DE-66636, Tholey (DE)
(74) Vertreter: Jacquot, Ludovic R. G.

(56) Entgegenhaltungen:
- US-A- 3 839 775
- PATENT ABSTRACTS OF JAPAN vol. 010, no. 299 (M-524), 11. Oktober 1986 (1986-10-11) -& JP 61 111860 A (TOSHIBA SEIKI KK), 29. Mai 1986 (1986-05-29)
- PATENT ABSTRACTS OF JAPAN vol. 013, no. 055 (M-795), 8. Februar 1989 (1989-02-08) -& JP 63 260732 A (MITSUBISHI MOTORS CORP), 27. Oktober 1988 (1988-10-27)
- PATENT ABSTRACTS OF JAPAN vol. 018, no. 483 (M-1670), 8. September 1994 (1994-09-08) -& JP 06 156335 A (NISSAN MOTOR CO LTD), 3. Juni 1994 (1994-06-03)

## Beschreibung

Die Erfindung betrifft ein Verfahren zum Positionieren eines mit einem ersten Ende an einem ersten Gehäuseteil befestigten und seitlich beweglichen länglichen Gegenstandes, insbesondere einer Feder, eines Stiftes oder eines Hebels, beim Verbinden des ersten Gehäuseteiles mit einem zweiten Gehäuseteil, in dem ein Aufnahmebereich für ein zweites Ende des länglichen Gegenstandes vorgesehen ist. Die Erfindung bezieht sich ferner auf eine Vorrichtung zur Durchführung eines derartigen Verfahrens.

Bei der Montage von Vorrichtungen, die sich aus mehreren Gehäuseteilen mit vormontierten Baugruppen zusammensetzen, tritt häufig das Problem auf, daß einzelne an einem Gehäuseteil befestigte Bauelemente (z.B. Federn, Stifte oder Hebel), die seitlich noch beweglich sind, beim Verbinden mit einem zweiten Gehäuseteil in einen genau definiert vorgegebenen Aufnahmebereich des zweiten Gehäuseteiles eingeführt werden bzw. sich an diesem abstützen müssen. Dabei kann in der Regel das Bauelement nicht durch einen mechanischen Greifer oder eine Führung etc. in einer vorgegebenen Position gehalten werden bis beide Gehäuseteile komplett miteinander verbunden sind, weil entweder eine Verbindung der Gehäuseteile dann nicht möglich ist oder ein derartiges Hilfselement nach der Verbindung der Gehäuseteile nicht mehr entfernt werden kann.

Um trotzdem ein möglichst genaues Einführen der an dem ersten Gehäuseteil bereits vormontierten Bauelemente in die entsprechenden Aufnahmebereiche des zweiten Gehäuseteiles vornehmen zu können, müssen die zu verbindenden Gehäuseteile entweder speziell positioniert werden (z.B. senkrecht übereinander angeordnet werden), so daß eine seitliche Bewegung des entsprechenden Bauelementes weitgehend ausgeschlossen werden kann, oder es müssen zusätzliche Führungsteile an den Baugruppenträgem bzw. Gehäuseteilen vorgesehen werden. Beide Maßnahmen sind relativ kostenintensiv und zeitaufwendig und führen häufig nicht zu dem gewünschten Erfolg, so daß nach einem Funktionstest der entsprechenden Vorrichtung die Gehäuseteile wieder getrennt und die entsprechenden Bauelemente neu positioniert werden müssen.

Der Erfindung liegt die Aufgabe zugrunde, ein Verfahren der eingangs erwähnten Art anzugeben, mit dem auf einfache Weise eine Zentrierung eines an einem ersten Gehäuseteil befestigten länglichen Gegenstandes in bezug auf den Aufnahmebereich eines zweiten Gehäuseteiles beim Verbinden der beiden Gehäuseteile möglich ist. Ferner soll eine Vorrichtung zur Durchführung dieses Verfahrens offenbart werden.

Diese Aufgabe wird erfindungsgemäß hinsichtlich des Verfahrens durch die Merkmale des Anspruchs 1 und hinsichtlich der Vorrichtung durch die Merkmale des Anspruchs 4 gelöst. Weitere, besonders vorteilhafte Ausgestaltungen der Erfindung offenbaren die Unteransprüche.

Die Erfmdung beruht im wesentlichen auf dem Gedanken, bei der Verbindung der beiden Gehäuseteile eine magnetische Zentrierung des an dem ersten Gehäuseteil vormontierten länglichen Gegenstandes vorzunehmen. Hierzu wird auf der dem Aufnahmebereich gegenüberliegenden Außenseite des zweiten Gehäuseteiles eine magnetische Einrichtung angeordnet, die z.B. einen Permanentmagneten oder einen Elektromagneten umfaßt.

Sofern der längliche Gegenstand nicht aus einem ferromagnetischen Material besteht (z.B. bei Verwendung einer Kunststoff-Feder oder eines Kunststoff-Stiftes), muß mindestens der dem Aufnahmebereich zugewandte Endbereich des Gegenstandes (z.B. durch Beschichten mit einem Metallpulver oder dem Einfügen eines metallischen Endstückes) mit einem ferromagnetischen Material versehen werden. Ferner muß sichergestellt werden, daß der zwischen dem Aufnahmebereich und dem zur Zentrierung benötigten Magneten liegende Wandbereich des zweiten Gehäuseteiles (z.B. durch Verwendung eines Kunststoff-Gehäuseteiles oder einer Kunststoff-Einlage) für die Magnetfelder des Zentriermagneten durchlässig ist.

Das erfindungsgemäße Verfahren weist unter anderem die Vorteile auf, daß gegenüber bekannten vergleichbaren Verfahren sowohl ein verminderter Ausschuß als auch eine gleichbleibende Qualität der montierten Gehäuseeinheiten sichergestellt wird. Außerdem fährt das Verfahren zu wesentlich geringeren Stillstandszeiten der Montagebänder bei einer automatischen Fertigung entsprechender Gehäuseeinheiten. Schließlich kann die Montageanordnung der zu verbindenden Gehäuseteile weitgehend beliebig gewählt werden.

Die Vorrichtung zur Durchführung des Verfahrens umfaßt eine Aufnahmeeinrichtung für das zweite Gehäuseteil und eine Halteeinrichtung für die magnetische Einrichtung, wobei die Halteeinrichtung eine Verstellvorrichtung zur Positionierung der magnetischen Einrichtung umfaßt, die derart ausgebildet ist, daß die magnetische Einrichtung in den Bereich der Außenwand des zweiten Gehäuseteiles positionierbar ist, der dem Aufnahmebereich des jeweiligen zweiten Gehäuseteiles gegenüberliegt.

Zur Positionierung der magnetischen Einrichtung kann die Halteeinrichtung einen mit der magnetischen Einrichtung verbundenen Pneumatik- oder Hydraulikzylinder aufweisen.

Weitere Einzelheiten und Vorteile der Erfindung ergeben sich aus den folgenden anhand von Figuren erläuterten Ausführungsbeispielen. Es zeigen:
Fig. 1 schematisch zwei miteinander zu verbindende Gehäuseteile und eine erfindungsgemäße Vorrichtung, wobei an dem ersten Gehäuseteil eine Feder befestigt ist, die sich nach Verbinden der beiden Gehäuseteile an einem genau definierten Aufnahmebereich des zweiten Gehäuseteiles abstützen soll und
Fig.2 die beiden in Fig. 1 dargestellten Gehäuseteile nach ihrer Verbindung.

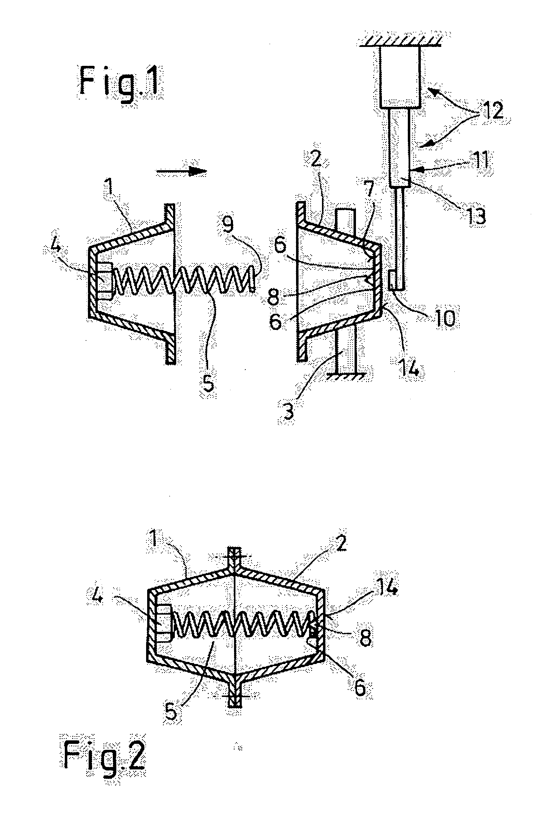

In Fig. 1 und 2 sind mit 1 und 2 zwei miteinander zu verbindende, aus Kunststoff oder nicht magnetischen Metallen bestehende Gehäuseteile bezeichnet, wobei das zweite Gehäuseteil 2 in einer Aufnahmeeinrichtung 3 gelagert ist. In dem ersten Gehäuseteil 1 ist eine vereinfacht nur als Kästchen dargestellte Baugruppe 4 wiedergegeben, bei der es sich beispielsweise um Schloßteile eines Lenkschlosses oder um mechanische Elemente eines Vergasers etc. handeln kann. Die Baugruppe 4 ist mit einer Zylinderfeder 5 aus einem ferromagnetischen Material verbunden, die sich nach der Verbindung der beiden Gehäuseteile 1, 2 in einem vorgegebenen Aufnahmebereich 6 der Innenwand 7 des zweiten Gehäuseteiles 2 um einen Zentrierkegel 8 herum abstützen soll (Fig.2).

Um zu vermeiden, daß das dem zweiten Gehäuseteil 2 zugewandte Ende 9 der Zylinderfeder 5 bei der in Fig. 1 dargestellten horizontalen Montageanordnung aufgrund der Schwerkraft nach unten gebogen wird und sich dann gegebenenfalls nach dem Verbinden der Gehäuseteile 1, 2 unterhalb des definierten Aufnahmebereiches 6 an dem zweiten Gehäuseteil 2 abstützt, ist erfindungsgemäß eine Zentrierung der Feder 5 mittels einer magnetischen Einrichtung 10 vorgesehen.

Hierzu befindet sich die im vorliegenden Ausführungsbeispiel im wesentlichen aus einem Permanentmagneten bestehende magnetische Einrichtung 10 an dem Ende der Verstellvorrichtung 11 einer Halteeinrichtung 12. Die Verstellvorrichtung 11 umfaßt einen Pneumatikzylinder 13, der über eine nicht dargestellte Steuervorrichtung mit einer ebenfalls nicht dargestellten Gasdruckquelle verbunden ist und von der Steuervorrichtung derart angesteuert wird, daß die magnetische Einrichtung 10 genau auf der dem Aufnahmebereich 6 des zweiten Gehäuseteiles 2 gegenüberliegenden Außenwand 14 angeordnet wird.

Wird nun das erste Gehäuseteil 1 zwecks Verbindung mit dem zweiten Gehäuseteil 2 horizontal auf Letzteres zubewegt, so kann die Feder 5 aufgrund der auf sie wirkenden magnetischen Kräfte nicht seitlich ausweichen und trifft genau den vorgegebenen Aufnahmebereich 6 des zweiten Gehäuseteiles 2. Dabei wird die Lagefixierung des Endes 9 der Feder 5 durch den Zentrierkegel 8 unterstützt.

Die Erfindung ist selbstverständlich nicht auf das vorstehend beschriebene Ausfuhrungsbeispiel beschränkt. So muß es sich bei den Gehäuseteilen nicht zwingend um Gehäuseteile handeln, welche nach ihrer Verbindung ein vollständig geschlossenes Gehäuse bilden. Überdies können beide Gehäuseteile auch als Bauträger ausgebildet sein etc.. Der Aufnahmebereich der Feder oder eines anderen länglichen Gegenstandes kann auch aus einer Vertiefung in dem zweiten Gehäuseteil bestehen.

### Bezugszeichenliste

- 1: (erste) Gehäuseteil
- 2: (zweite) Gehäuseteil
- 3: Aufnahmeeinrichtung
- 4: Baugruppe
- 5: (länglicher) Gegenstand, Feder, Zylinderfeder
- 6: Aufnahmebereich
- 7: Innenwand
- 8: Zentrierkegel
- 9: (zweite) Ende
- 10: magnetische Einrichtung
- 11: Verstellvorrichtung
- 12: Halteeinrichtung
- 13: Pneumatikzylinder
- 14: Außenwand

## Patentansprüche

1. Verfahren zum Positionieren eines mit einem ersten Ende an einem ersten Gehäuseteil (1) befestigten und seitlich beweglichen länglichen Gegenstandes (5), insbesondere einer Feder, eines Stiftes oder eines Hebels, beim Verbinden des ersten Gehäuseteiles (1) mit einem zweiten Gehäuseteil (2) bei horizontaler Montageanordnung, in dem ein Aufnahmebereich (6) für ein zweites Ende (9) des länglichen Gegenstandes (5) vorgesehen ist, wobei mindestens das zweite Ende (9) des Gegenstandes (5) ferromagnetische Eigenschaften aufweist und mindestens ein dem Aufnahmebereich (6) benachbarter Wandbereich des zweiten Gehäuseteiles (2) aus einem Magnetfelder durchlassenden Material besteht,
**dadurch gekennzeichnet, daß**
der längliche Gegenstand (5) horizontal ausgerichtet ist und auf der dem Aufnahmebereich (6) gegenüberliegenden Außenwand (14) des zweiten Gehäuseteiles (2) eine magnetische Einrichtung (10) angeordnet wird, welche beim Verbinden der beiden Gehäuseteile (1, 2) auf das zweite Ende (9) des länglichen Gegenstandes (5) wirkt und dieses in Bezug auf den Aufnahmebereich (6) des zweiten Gehäuseteiles (2) zentriert, um eine Biegung des zweiten Endes (9) des länglichen Gegenstandes nach unten aufgrund der Schwerkraft zu vermeiden.

2. Verfahren nach Anspruch 1, **dadurch gekennzeichnet, daß** die beiden Gehäuseteile (1, 2) derart ausgebildet sind, daß sich nach ihrem Verbinden ein geschlossenes Gehäuse ergibt.

3. Verfahren nach Anspruch 1 oder 2, **dadurch gekennzeichnet, daß** mindestens das erste Gehäuseteil (1) innenseitig eine Baugruppe (4) umfaßt, an welcher der längliche Gegenstand (5) mit seinem ersten Ende befestigt ist.

4. Vorrichtung zur Durchführung des Verfahrens nach einem der Ansprüche 1 bis 3, **dadurch gekennzeichnet, daß** die Vorrichtung eine Aufnahmeeinrichtung (3) für das zweite Gehäuseteil (2) und eine Halteeinrichtung (12) für die magnetische Einrichtung (10) umfaßt, wobei die Halteeinrichtung (12) eine Verstellvorrichtung (11) zur Positionierung der magnetischen Einrichtung (10) umfaßt, die derart ausgebildet ist, daß die magnetische Einrichtung (10) auf die dem Aufnahmebereich (6) des jeweiligen zweiten Gehäuseteiles (2) gegenüberliegenden Außenwand (14) positionierbar ist.

5. Vorrichtung nach Anspruch 4, **dadurch gekennzeichnet, daß** die magnetische Einrichtung (10) einen Permanentmagneten oder einen Elektromagneten enthält.

6. Vorrichtung nach Anspruch 4 oder 5, **dadurch gekennzeichnet, daß** zur Positionierung der magnetischen Einrichtung (10) die Halteeinrichtung einen mit der magnetischen Einrichtung verbundenen Pneumatik- oder Hydraulikzylinder (13) umfaßt.

## Claims

1. Method for positioning an elongate article (5), in particular a spring, a pin or a lever, which is fixed to a first housing part (1) by way of a first end and can move laterally, when the first housing part (1) is connected to a second housing part (2) with horizontal installation arrangement, in which second housing part an accommodation region (6) for a second end (9) of the elongate article (5) is provided, wherein at least the second end (9) of the article (5) has ferromagnetic properties and at least one wall region of the second housing part (2), which wall region is adjacent to the accommodation region (6), comprises a material which is permeable to magnetic fields,
**characterized in that**
the elongate article (5) is oriented horizontally and a magnetic device (10) is arranged on that outer wall (14) of the second housing part (2) which is opposite the accommodation region (6), the said magnetic device acting on the second end (9) of the elongate article (5) and centring said second end with respect to the accommodation region (6) of the second housing part (2) when the two articles (1, 2) are connected, in order to prevent bending of the second end (9) of the elongate article downwards on account of the force of gravity.

2. Method according to Claim 1, **characterized in that** the two housing parts (1, 2) are designed in such a way that a closed housing is formed after they are connected.

3. Method according to Claim 1 or 2, **characterized in that** the inside of at least the first housing part (1) comprises an assembly (4) to which the elongate article (5) is fixed by way of its first end.

4. Apparatus for carrying out the method according to one of Claims 1 to 3, **characterized in that** the apparatus comprises an accommodation device (3) for the second housing part (2) and a retaining device (12) for the magnetic device (10), wherein the retaining device (12) comprises an adjusting apparatus (11) for positioning the magnetic device (10), which adjusting device is designed in such a way that the magnetic device (10) can be positioned on the outer wall (14) which is opposite the accommodation region (6) of the respective second housing part (2).

5. Apparatus according to Claim 4, **characterized in that** the magnetic device (10) contains a permanent magnet or an electromagnet.

6. Apparatus according to Claim 4 or 5, **characterized in that** the retaining device comprises a pneumatic or hydraulic cylinder (13), which is connected to the magnetic device, in order to position the magnetic device (10).

## Revendications

1. Procédé de positionnement d'un objet allongé (5) fixé par une première extrémité à une première partie de boîtier (1) et mobile latéralement, notamment un ressort, une broche ou un levier, lors de la jonction de la première partie de boîtier (1) avec une deuxième partie de boîtier (2) dans un arrangement de montage horizontal, dans laquelle est prévue une zone d'accueil (6) pour une deuxième extrémité (9) de l'objet allongé (5), au moins la deuxième extrémité (9) de l'objet (5) présentant des propriétés ferromagnétiques et au moins une zone de paroi voisine de la zone d'accueil (6) de la deuxième partie de boîtier (2) étant constituée d'un matériau laissant passer les champs magnétiques, **caractérisé en ce que** l'objet allongé (5) est orienté dans le sens horizontal et sur la paroi extérieure (14) de la deuxième partie de boîtier (2) à l'opposé de la zone d'accueil (6) est disposé un dispositif magnétique (10) qui agit sur la deuxième extrémité (9) de l'objet allongé (5) lors de la jonction des deux parties de boîtier (1, 2) et centre celle-ci par rapport à la zone d'accueil (6) de la deuxième partie de boîtier (2) afin d'éviter une flexion de la deuxième extrémité (9) de l'objet allongé vers le bas du fait de la gravité.

2. Procédé selon la revendication 1, **caractérisé en ce que** les deux parties de boîtier (1, 2) sont configurées de telle sorte qu'un boîtier fermé est obtenu après leur jonction.

3. Procédé selon la revendication 1 ou 2, **caractérisé en ce qu'**au moins la première partie de boîtier (1) comprend à l'intérieur un sous-ensemble (4) auquel l'objet allongé (5) est fixé par sa première extrémité.

4. Dispositif pour mettre en oeuvre le procédé selon l'une des revendications 1 à 3, **caractérisé en ce que** le dispositif comprend un dispositif d'accueil (3) pour la deuxième partie de boîtier (2) et un dispositif de maintien (12) pour le dispositif magnétique (10), le dispositif de maintien (12) comprenant un dispositif de positionnement (11) pour positionner le dispositif magnétique (10), lequel est configuré de telle sorte que le dispositif magnétique (10) peut être positionné sur la paroi extérieure (14) à l'opposé de la zone d'accueil (6) de la deuxième partie de boîtier (2) respective.

5. Dispositif selon la revendication 4, **caractérisé en ce que** le dispositif magnétique (10) contient un aimant permanent ou un électroaimant.

6. Dispositif selon la revendication 4 ou 5, **caractérisé en ce que** pour le positionnement du dispositif magnétique (10), le dispositif de maintien comprend un vérin pneumatique ou hydraulique (13) relié avec le dispositif magnétique.
